# EUROPEAN PATENT APPLICATION

(11) **EP 4 741 213 A1**
(43) Date of publication of application: **13.05.2026**
(21) Application number: 25213358.2
(22) Date of filing: 04.11.2025
(51) Int. Cl.: B60L 53/14, B60L 53/62, B60L 53/66, B60L 58/27, H01M 10/615, H01M 10/637

(54) **ALTERNATING CURRENT BATTERY HEATING**

(30) Priority: 07.11.2024 US 202463717719 P; 20.06.2025 US 202519244520
(71) Applicant: Tesla, Inc., Austin, TX 78725 (US)
(72) Inventor: PATEL, Saiyam, Austin, 78725 (US); SANKARANARAYANAN, Vivek, Austin, 78725 (US); LIAO, Zitao, Austin, 78725 (US); JOHN, Ben, Austin, 78725 (US); GUO, Owen, Austin, 78725 (US); MUELLER, Sebastian, Austin, 78725 (US); TAO, Alan, Austin, 78725 (US); ESSADAOUI, Zakaria, Austin, 78725 (US)
(74) Representative: Zacco Sweden AB

(57) **Abstract**

A system for managing a battery pack of an electric vehicle includes a sensor and a controller. The sensor is configured to detect a temperature associated with the battery pack. The controller is configured to transmit a request to a charger based on a sensor signal from the sensor, and provide at least a portion of alternating current associated with the request and received from the charger to at least a first battery cell of the battery pack such that heat is generated based on an internal resistance of the first battery cell to increase a temperature associated with the first battery cell. Related electric vehicles, methods, and chargers are disclosed.

## Description

### CROSS-REFERENCE TO PRIORITY APPLICATIONS

This application claims priority to U.S. Patent Application No. 19/244520, entitled "ALTERNATING CURRENT BATTERY HEATING," filed on June 20, 2025, which claims priority to U.S. Provisional Patent Application No. 63/717,719, entitled "ALTERNATING CURRENT BATTERY HEATING," filed on November 7, 2024, the entire disclosures of each of which are hereby incorporated by reference in their entireties and for all purposes.

### TECHNICAL FIELD

The present disclosure relates to heating batteries. More specifically, embodiments of the present disclosure relate to methods and systems for heating battery packs using alternating current (AC).

### BACKGROUND

Electric vehicles can experience reduced performance in cold weather conditions. For example, battery packs used in electric vehicles can face challenges when being charged at low temperatures (e.g., below 0°C). Under certain low temperature conditions, vehicles may not be able to charge their battery packs, which can result in long wait times at charging stations and some vehicles losing power entirely. Further, charging at low temperatures can lead to battery cell degradation and lithium plating, which can impact energy storage system life and performance.

### SUMMARY OF CERTAIN INVENTIVE ASPECTS

The systems, methods and devices of this disclosure each have several innovative embodiments, no single one of which is solely responsible for all of the desirable attributes disclosed herein. Details of one or more implementations of the subject matter described in this specification are set forth in the accompanying drawings and the description below.

In some aspects, the techniques described herein relate to a system for managing a battery pack of an electric vehicle, the system including: a sensor configured to detect a temperature associated with the battery pack; and a controller in communication with the sensor, the controller configured to: transmit a request to a charger based on a sensor signal from the sensor, the request identifying an alternating current waveform; and provide at least a portion of alternating current associated with the request and received from the charger to at least a first battery cell of the battery pack such that heat is generated based on an internal resistance of the first battery cell to increase a temperature associated with the first battery cell.

In some aspects, the techniques described herein relate to a system, wherein the controller is configured to transmit the request to the charger in response to determining, based on the sensor signal, that the temperature associated with the battery pack satisfies a threshold.

In some aspects, the techniques described herein relate to a system, wherein the request specifies at least one of an amplitude, a frequency, or a direct current (DC) offset for the alternating current.

In some aspects, the techniques described herein relate to a system, wherein the controller is configured to determine at least one of the amplitude, the frequency, or the DC offset based on at least one of: a cell type of the battery pack, the temperature associated with the battery pack, or a state of charge of the battery pack.

In some aspects, the techniques described herein relate to a system, wherein a frequency of the alternating current is in a range from 80 Hertz (Hz) to 500 Hz.

In some aspects, the techniques described herein relate to a system, wherein an amplitude of the alternating current is in a range from 100 Amperes to 1000 Amperes.

In some aspects, the techniques described herein relate to a system, wherein the controller is configured to monitor the alternating current and transmit an updated request based on monitoring the alternating current.

In some aspects, the techniques described herein relate to an electric vehicle including: a plurality of battery cells including a first battery cell; and a battery management system configured to: detect a condition associated with the plurality of battery cells; in response to detecting the condition, transmit a request to a charger; and provide at least a portion of alternating current associated with the request and received from the charger to at least the first battery cell such that an internal resistance of the first battery cell and the alternating current increase a temperature associated with the first battery cell.

In some aspects, the techniques described herein relate to an electric vehicle, wherein the condition includes at least one of: a temperature associated with the plurality of battery cells, a state of charge of the plurality of battery cells, or a cell type of the plurality of battery cells.

In some aspects, the techniques described herein relate to an electric vehicle, wherein the request specifies a direct current (DC) offset for the alternating current, and wherein the battery management system determines the DC offset based at least in part on a temperature associated with the plurality of battery cells.

In some aspects, the techniques described herein relate to an electric vehicle, wherein the battery management system is configured to provide the alternating current to the plurality of battery cells to charge at least one of the plurality of battery cells.

In some aspects, the techniques described herein relate to an electric vehicle, further including one or more other components, wherein the battery management system provides alternating current to power the one or more other components, and wherein the one or more other components include at least one of a drive unit, a compressor, or a power conversion system.

In some aspects, the techniques described herein relate to an electric vehicle, wherein the request specifies an amplitude and a DC offset for the alternating current, and wherein the battery management system is configured to determine the amplitude and the DC offset based at least in part on the condition.

In some aspects, the techniques described herein relate to an electric vehicle, wherein the battery management system is configured to: monitor an amplitude of the alternating current to generate a monitor signal; generate, based on the monitor signal, an updated request for adjusting the amplitude of the alternating current; and transmit the updated request to the charger.

In some aspects, the techniques described herein relate to a method for managing a battery pack, the method including: detecting a temperature associated with the battery pack; transmitting a request to a charger based on the temperature, the request identifying an alternating current waveform; and providing alternating current associated with the request and received from the charger to at least a first battery cell of the battery pack such that heat is generated based on an internal resistance of the first battery cell to increase the temperature associated with the first battery cell.

In some aspects, the techniques described herein relate to a method, further including: monitoring an amplitude of the alternating current to generate a monitor signal; and generating, based on the monitor signal, and transmitting an updated request to the charger for adjusting the amplitude of the alternating current.

In some aspects, the techniques described herein relate to a method, further including: determining that the temperature associated with the battery pack satisfies a threshold, wherein the request is transmitted in response to determining that the temperature associated with the battery pack satisfies the threshold.

In some aspects, the techniques described herein relate to a method, further including: determining an amplitude, a frequency, and a DC offset based on at least one of: a cell type of the battery pack, the temperature associated with the battery pack, and a state of charge of the battery pack, wherein the alternating current waveform indicates the amplitude, the frequency, and the DC offset.

In some aspects, the techniques described herein relate to a method, further including providing the alternating current to power a drive unit, a compressor, or a power conversion system of an electric vehicle.

In some aspects, the techniques described herein relate to a method, wherein a frequency of the alternating current is between 80 Hz to 500 Hz.

In some aspects, the techniques described herein relate to a charger for charging and heating a battery pack of an electric vehicle, the charger including: a plurality of voltage converters configured to generate alternating current based on a control signal and transmit the alternating current to the electric vehicle; and a controller in communication with the plurality of voltage converters, the controller configured to: receive, from the electric vehicle, a request associated with heating the battery pack; in response to the request, generate and transmit the control signal to the plurality of voltage converters; and cause the plurality of voltage converters to transmit the alternating current associated with the request to the electric vehicle for heating the battery pack.

### BRIEF DESCRIPTION OF THE DRAWINGS

Embodiments of the present disclosure are described with reference to the accompanying drawings, in which like reference characters reference like elements, and wherein:
FIG. 1A is an example schematic diagram of components of an example vehicle in which embodiments of the present disclosure can be implemented.
FIG. 1B is an example schematic representation of the example vehicle of FIG. 1A in accordance with some embodiments of the present disclosure.
FIG. 2 is a schematic diagram of components of an example charger in which embodiments of the present disclosure can be implemented.
FIG. 3 is a graph of heating performance associated with various heating methods.
FIG. 4 is a schematic diagram of components of a charger for charging an electric vehicle according to some embodiments.
FIG. 5 is a graph of phase of currents of posts of the charger of FIG. 4 compared to phase of a high voltage on a bus of the charger of FIG. 4.
FIG. 6 is a schematic diagram of components of the charger of FIG. 4 for controlling alternating current (AC) ripple across multiple direct current to direct current (DC-DC) voltage converters according to some embodiments.

### DETAILED DESCRIPTION

The following description of certain embodiments presents various descriptions of specific embodiments. However, the innovations described herein can be embodied in a multitude of different ways, for example, as defined and covered by the claims. In this description, reference is made to the drawings where like reference numerals can indicate identical or functionally similar elements. It will be understood that elements illustrated in the figures are not necessarily drawn to scale. Moreover, it will be understood that certain embodiments can include more elements than illustrated in a drawing and/or a subset of the elements illustrated in a drawing. Further, some embodiments can incorporate any suitable combination of features from two or more drawings. Any suitable principles and advantages of the embodiments disclosed herein can be implemented together with each other.

Generally described, one or more aspects of the present disclosure relate to methods and systems for heating battery packs in electric vehicles using alternating current (AC). Such heating can improve charging performance in cold weather conditions. As used herein, alternating current can include current in the form of a sine wave, pulse, ripple, square wave, saw wave, or the like. Some embodiments of the present disclosure relate to a charging system (e.g., a system that can include components in a charger and components in a vehicle) that leverages internal resistance of battery cells in a battery pack to generate heat for heating up the battery pack by providing alternating current from a charger (e.g., a charging station) through a charge port of the vehicle into one or more battery cells in the battery pack. The provided alternating current can be a signal (e.g., an electrical signal) that can be described using various types of signal waveforms (e.g., sinusoidal, square, sawtooth, pulse, ripple, and/or the like). The alternating current can have a DC offset (e.g., a shift in the baseline of an AC signal). For example, the alternating current with a DC offset can oscillate around a non-zero baseline rather than around zero.

In some embodiments, upon detecting a triggering condition (e.g., temperature of the battery pack being lower than a threshold), an electric vehicle (e.g., a battery management system (BMS) of the electric vehicle) can transmit a request for heating up the battery pack to a charger. Responsive to receiving the request, the charger can generate and provide alternating current (e.g., synchronized alternating current signal provided to one or more battery cells) for heating battery cell(s) of the battery pack (e.g., using the alternating current and the internal resistance of battery cells of the battery pack) before, during, and/or after charging the battery pack. The vehicle can also provide information specifying a waveform of the alternating current for the charger to generate the alternating current for heating.

Advantageously, by utilizing alternating current to generate heat using the internal resistance of battery cells, the charging system can more effectively heat up the battery cells and achieve higher energy efficiency as well as faster heating compared to certain other approaches. For example, a disclosed alternating current heating method can achieve over 90% efficiency, compared to less than 50% efficiency for certain coolant-based heating methods. The increased efficiency of alternating current heating can be due to less losses in conducting an alternating current to the battery cells and the direct generation of heat within the battery cells, which may reduce thermal barriers and heat loss. Advantageously, the charging system can quickly bring a battery pack to better or optimal charging temperatures, even in extremely cold conditions. This rapid heating capability may enable vehicles to be charged within a relatively short period of time (e.g., within 15 minutes at -20°C ambient temperature).

The charging system can utilize existing hardware on both an electric vehicle and a charger, enabling relatively low cost and/or retroactive implementation in the existing fleet of vehicles. For example, on the charger side, the charging system can synchronize DC-DC converters (e.g., bi-directional DC-DC converters or isolated DC-DC converters) to constructively generate the electric vehicle's requested alternating current (e.g., alternating current having an amplitude, frequency, and/or direct current (DC) offset specified by the electric vehicle). On the electric vehicle side, the charging system may utilize existing hardware associated with charge port(s) and a BMS, and control (e.g., through updated firmware) the existing hardware to accomplish battery heating. By enabling rapid heating of battery packs, the charging system may significantly improve overall vehicle charging speed and charging station throughput. This can reduce wait times for customers and enhance the overall efficiency of the charging infrastructure.

In general, electric vehicle charging systems or charging systems can refer to the infrastructure and technology used to charge electric vehicles (EVs). Charging systems typically include charging stations, connectors, and associated software, firmware, and hardware to manage the charging process. Charging systems can vary in terms of power levels, ranging from relatively slow chargers that use standard household outlets to relatively fast chargers or charging stations that can recharge an EV battery in a significantly shorter time. Charging systems are tasked to provide efficient, safe, and reliable energy transfer to the vehicle's battery pack, ensuring that the EV is ready for use.

A technical challenge in the field of electric vehicle charging is to charge battery packs efficiently under cold weather conditions. Lithium-ion batteries, which are widely used in EVs, can have a limited ability to accept charge at temperatures below 0°C. Charging at such low temperatures can also lead to cell degradation and lithium plating, which can impact the battery's performance and lifespan. Additionally, under low temperatures, a vehicle may not be able to charged. This can result in long wait times at charging stations and some vehicles losing power entirely.

Certain technical solutions for charging battery packs under cold weather conditions involve using heat generated external to the battery packs to heat up the battery packs. For example, some systems use heated coolant to warm the battery pack. This method can involve circulating heated fluid through the battery pack to raise its temperature. However, this approach may be less than 50% efficient due to thermal barriers and heat loss. Additionally, the performance of heat pumps, which can be used in conjunction with coolant-based heating, may significantly degrade in cold temperatures, as there may be no ambient heat to source from.

To address at least a portion of the above problems, some embodiments of the present disclosure relate to a charging system that leverages internal resistance of battery cells in a battery pack for heating up the battery pack by providing alternating current from a charger through a charge port into battery cells in the battery pack. In some embodiments, when a BMS of an electric vehicle determines to heat the battery pack, the BMS transmits a request for heating up the battery pack to the charger such as a charging station. For example, the BMS may determine to heat the battery pack in response to detecting that a temperature of the battery pack is below a threshold and/or in response to detecting one or more other conditions (e.g., frost or ice piled up on battery packs, weather such as a snow storm, or the like).

The request may specify one or more parameters (e.g., one or more of amplitude, frequency, DC offset, model number associated with battery cells, and/or the like) associated with alternating current that is to be generated by and injected from the charger. In some embodiments, the BMS may determine the amplitude, frequency, DC offset associated with the alternating current based on one or more of battery cell type, temperature associated with a battery pack, state of charge of the battery pack, and/or the like.

For example, if the temperature associated with the battery pack is quite low (e.g., below -20°C), the BMS may request alternating current with higher amplitude to speed up the heating up process, compared with situations where the temperature associated with the battery pack is higher (e.g., around -5°C). As another example, when the temperature associated with the battery pack is above 0°C, the BMS may determine that the battery pack can be charged using direct current. In this example, rather than generating alternating current without DC offset, the BMS may request alternating current be generated with DC offset of certain offset value(s) that may be dependent upon how quickly the battery pack is to be charged using direct current. As yet another example, the BMS may request that alternating current be generated with DC offset for powering one or more other components (e.g., drive units, compressor, power conversion system, or the like) of an electric vehicle regardless of the temperature of the battery pack. Advantageously, by using the alternating current to power other components, power from the battery pack may not be used.

In some embodiments, the BMS may request alternating current having frequency in a range from 80Hz to 320Hz, in a range from 100Hz to 200Hz, in a range from 100Hz to 500Hz, or from any other suitable ranges between 80Hz to 500Hz. In some embodiments, the BMS may request alternating current having amplitude in a range between 100A to 600A, 200A to 600A, 200A to 900A, 300A to 800A, 100A to 700A, 600A to 1000A, and/or any other suitable ranges between 100A to 1000A. In some examples, the frequency of an alternating current signal requested by the BMS can be the same as (e.g., without intermediate conversion) or different (e.g., through intermediate conversion of received alternating current to higher or lower frequencies) from an alternating current applied to a battery cell.

Responsive to receiving the request, the charger can generate alternating current based on the request. The alternating current can be provided to a charge port of an electric vehicle and then flow into the battery pack to heat up (e.g., using heat generated by the internal resistance of battery cells of the battery pack) the battery pack before and/or during charging of the battery pack. In some embodiments, the charger can utilize DC-DC converters to generate and synchronize alternating current for providing to the electric vehicle and/or injecting into the battery pack. For example, the charger may include multiple (e.g., four) DC-DC converter sets, where each DC-DC converter set can include one or more (e.g., four) DC-DC converters capable of generating AC waveforms. Each DC-DC converter set can convert signal(s) on a high-voltage DC bus (e.g., around 900 Volts) into the desired AC waveform. The DC-DC converter sets can be configured to generate the AC waveform according to specified amplitude, frequency, and DC offset as requested by the BMS of the electric vehicle. In some embodiments, each DC-DC converter of a DC-DC converter set can generate a portion of the alternating current that is to be provided to the battery pack. Individual AC waveforms generated by DC-DC converters in a DC-DC converter set may be phase-aligned and frequency-aligned, thereby allowing individual AC waveforms to add constructively to generate requested alternating current. In some embodiments, the amplitude of the alternating current may be distributed among DC-DC converters in a DC-DC converter set. In some embodiments, if the vehicle requests an alternating current with an amplitude of 400 Amperes (A) and there are four DC-DC converters in a DC-DC converter set, each DC-DC converter of the DC-DC converter set may generate an AC waveform with an amplitude of 100A.

In some embodiments, the charger may monitor signals on the high-voltage DC bus and/or signals output by a DC-DC converter set to maintain synchronization among AC waveforms generated by DC-DC converters in a DC-DC converter set and/or protect components of the charger from being damaged. More specifically, the charger can operate without digital synchronization techniques to synchronize outputs (e.g., current) of DC-DC converters in a DC-DC converter set. Instead, the charger can monitor the voltage on the high-voltage DC bus and/or AC waveforms generated by each of the DC-DC converter sets to maintain synchronization (e.g., based on monitored phase and/or frequency of the voltage on the high-voltage DC bus). Advantageously, this monitoring also allows the charger to detect any anomalies or excessive currents flowing through a capacitor that is connected to the high-voltage DC bus and supplies current to the DC-DC converter sets. As such, the capacitor may not be damaged or over-stressed.

Additionally and/or optionally, to avoid stressing or damaging the capacitor that supplies current to the DC-DC converter sets, the input signals (e.g., input voltages or currents) to at least some of the DC-DC converter sets can be controlled to be in opposite phase to each other. For example, rather than supplying four in-phase input signals to each set of four DC-DC converter sets, two sets of four DC-DC converter sets can receive input signals in a first phase and the other two sets of four DC-DC converter sets can receive input signals in a second phase that is opposite to the first phase. As another example, an input signal to a DC-DC converter set can be out-of-phase to other input signals to other DC-DC converter sets. By optionally avoiding supplying all in-phase signals to the DC-DC converter sets, the charger can reduce stress on the capacitor. This can impede or prevent the capacitor from being over-stressed.

During the period when the battery pack is heated, the BMS of the electric vehicle may monitor the heating process and can adjust the parameters (e.g., amplitude, frequency, DC offset, and/or the like) based on monitored results. The BMS can adjust one or more of the parameters dynamically and/or periodically. In some embodiments, the BMS can monitor the amplitude, frequency, and/or DC offset of the alternating current received from the charger and compare the monitored amplitude, frequency, and/or DC offset with what was requested by the BMS. For example, if the BMS determines that the amplitude of the alternating current is less than the amplitude that was requested, the BMS may transmit an updated request to the charger. The updated request may request a higher amplitude compared with what was previously requested. On the other hand, if the BMS determines that the amplitude of the alternating current is higher than what was requested or higher than an appropriate level, the BMS may transmit an updated request requesting the charger lower the amplitude of the alternating current.

As noted above, the BMS may request alternating current with a DC offset. In some embodiments, during the heating process, the BMS may also distribute the alternating current with the DC offset among a battery pack and one or more other components of an electric vehicle. For example, if the temperature of the battery pack is above a threshold (e.g., > 0°C), the BMS may allow alternating current with DC offset to be provided to the battery pack. As such, the AC component of the alternating current can be used to heat the battery pack, and the DC component of the alternating current can be used to charge the battery. On the other hand, if the BMS determines that the temperature of the battery pack is below the threshold, the BMS may separate (e.g., using filtering techniques) the AC component of the alternating current and the DC component of the alternating current. For example, the BMS may allow only the AC component to be provided to the battery pack for heating the battery pack and may utilize the DC component of the alternating current to charge or power one or more other components (e.g., drive units, compressor, power conversion system, or the like) of the electric vehicles.

In some embodiments, the BMS can employ one or more control algorithms to manage the distribution of the AC and DC components. For example, based on the battery pack's temperature, state of charge, and/or other factors, the BMS can determine how much of the AC component should be used for heating and how much of the DC component should be used for charging. Advantageously, the control algorithms can ensure that the battery pack is heated efficiently without compromising the charging process. Additionally and/or optionally, the BMS can dynamically and/or periodically adjust the separation of the AC and DC components based on real-time conditions. For example, if the battery pack's temperature rises above a certain threshold, the BMS may reduce the AC component used for heating and increase the DC component used for charging. This dynamic and/or periodic adjustment may accomplish optimal vehicle performance and safety. As noted above, in addition to regulating the heating and charging of the battery pack, the BMS can distribute the AC and DC components of alternating current from the charger to other auxiliary loads within the electric vehicle. For example, the DC component can be used to power the heating, ventilation, and air conditioning (HVAC) system, a drive unit, and/or other high-voltage devices, while the AC component and the DC component can be used to charge and heat the battery pack. This distribution can enable all vehicle systems to operate efficiently and effectively.

The foregoing aspects and many of the attendant advantages of this disclosure will become more readily appreciated as the same become better understood by reference to the following description, when taken in conjunction with the accompanying drawings.

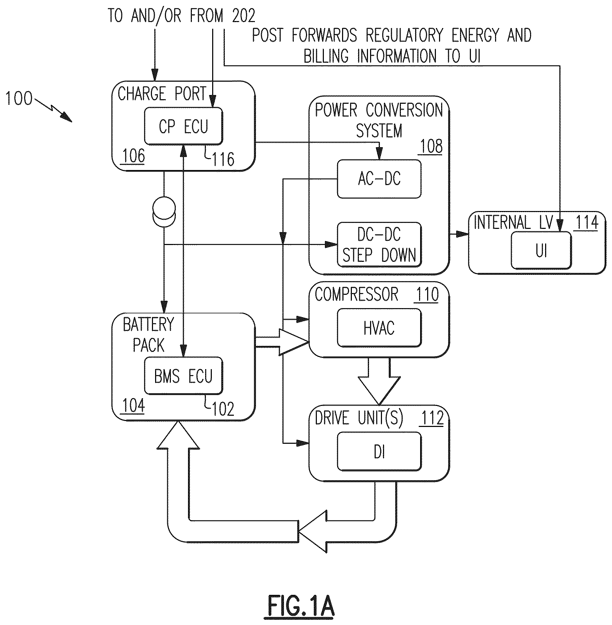

FIG. 1A is an example schematic block diagram of components of an example electric vehicle 100 in which embodiments of the present disclosure can be implemented. As shown in FIG. 1A, the electric vehicle 100 includes the battery pack 104, the BMS 102, the charge port 106, the power conversion system 108, the compressor 110, the drive unit 112, and the internal LV 114. The electric vehicle 100 also includes a coolant loop that can heat and cool the battery pack 104. It should be noted that although the BMS 102 is illustrated to be a part of the battery pack 104, the BMS 102 can be separate or outside from the battery pack 104 in some other embodiments.

The battery pack 104 can include multiple lithium-ion battery cells that store electrical energy for the vehicle. As noted above, the internal resistance of the battery cells can be utilized to generate heat when alternating current is applied, thereby warming the battery cells from the inside. For example, electrical resistance of a jelly roll can generate heat within a battery cell. The BMS 102 can be or include an electrical control unit (ECU) associated with the battery pack. The BMS 102 can include any suitable circuitry to perform the functions of the BMSs disclosed herein. Advantageously, leveraging alternating current and an internal resistance of a battery cell can enable heat to be generated uniformly and/or efficiently within the battery cell. The internal resistance can result in heating whenever current passes through a battery cell, without damaging the battery cell. Additionally, heating may occur more quickly compared with other approaches (e.g., using heat pump or cooling, resistive heating, or other heating mechanisms from outside the battery cell).

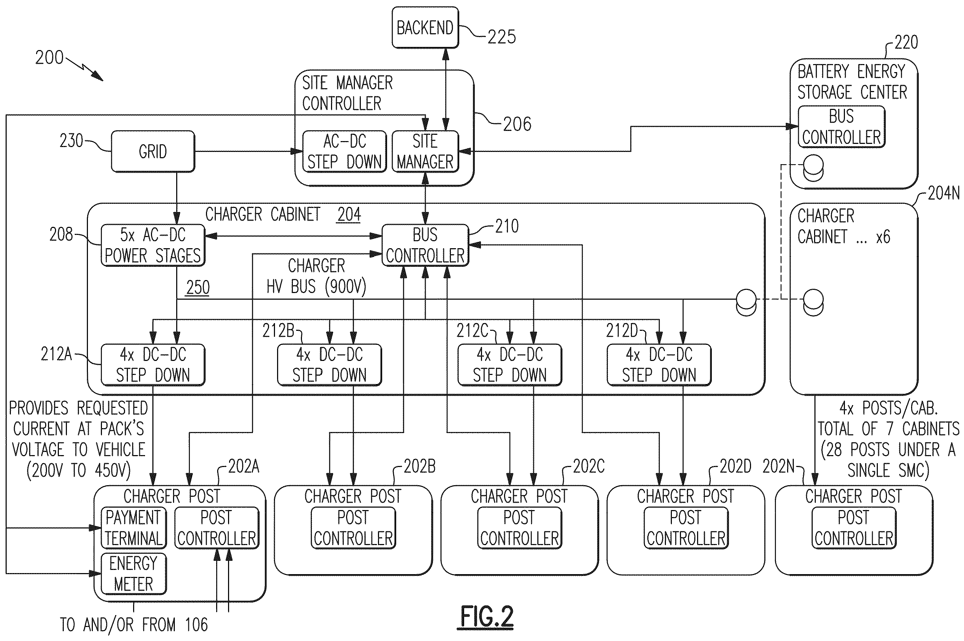

The power conversion system 108 can convert electrical energy from a charger (e.g., the charger 200 of FIG. 2) into a form that can be used by the battery pack 104 and/or other high-voltage (HV) devices within the electric vehicle 100. The compressor 110 can be a part of the vehicle's HVAC system. The HVAC system can be used to manage the temperature within the cabin of the electric vehicle 100. The drive unit 112 can include the electric motor and associated components that provide propulsion for the electric vehicle 100. The internal low voltage (LV) system 114 can refer to the low-voltage electrical system within the electric vehicle 100, which powers various auxiliary devices and systems. The power conversion system 108 can generate power for the internal LV system 114.

The charge port 106 can be the interface through which the electric vehicle 100 connects to the charger 200. The charge port 106 facilitates the transfer of electrical energy from the charger 200 to the battery pack 104 and other components. The charge port 106 can also serve as the communication link between the electric vehicle 100 and the charger 200, facilitating transmission of the BMS 102's requests for alternating current to heat the battery pack 104. In such instances, the electronic control unit (ECU) 116 of the charge port 106 can facilitate such a request. The ECU 116 of the charge port 106 can communicate the request to a post controller of a charger post 202 of FIG. 2, and the post controller can communicate the request to bus controller 210 of FIG. 2. The bus controller 210 of FIG. 2 can control DC-DC converter sets 212A, 212B, 212C, and/or 212D of FIG. 2 to generate the AC current for battery heating. In some applications, a request from the BMS 102 can be sent wirelessly to the charger 200 of FIG. 2.

In some embodiments, when the BMS 102 determines to heat the battery pack 104, the BMS 102 can transmit a request for heating up the battery pack 104 to the charger 200. The request can be transmitted through the charge port 106 to the charger 200 in certain applications. For example, the BMS 102 may determine to heat the battery pack 104 in response to detecting that a temperature of the battery pack 104 is below a threshold and/or upon detecting one or more other conditions (e.g., frost or ice piled up on battery packs, snow storm weather, or the like).

The request may specify one or more parameters (e.g., amplitude, frequency, DC offset, and/or the like) associated with alternating current that is to be generated by and injected from the charger 200. In some embodiments, the BMS 102 may determine one or more of the amplitude, frequency, DC offset associated with the alternating current based on one or more of battery cell type of the battery pack 104, temperature associated with the battery pack 104, state of charge of the battery pack 104, and/or the like.

For example, if the temperature associated with the battery pack 104 is quite low (e.g., below -20°C), the BMS 102 may request alternating current with higher amplitude to speed up the heating up process, compared with situations where the temperature associated with the battery pack 104 is higher (e.g., around -5°C). As another example, when the temperature associated with the battery pack 104 is above 0°C, the BMS 102 may determine that the battery pack 104 can be charged using direct current. In this example, rather than generating alternating current without DC offset, the BMS 102 may request alternating current be generated with DC offset of certain offset value(s) that may be dependent upon how speedy the battery pack 104 is to be charged using direct current. As yet another example, the BMS 102 may request that alternating current be generated with DC offset for powering other components (e.g., drive unit 112, compressor 110, power conversion system 108, or the like) of the electric vehicle 100 regardless of the temperature of the battery pack 104.

In some embodiments, the BMS 102 may request alternating current having frequency in a range from 80Hz to 320Hz, in a range from 100Hz to 200Hz, in a range from 100Hz to 500Hz, or from any other suitable ranges between 80Hz to 500Hz. In some embodiments, the BMS 102 may request alternating current having amplitude in a range between 600A to 1000A, 200A to 900A, 300A to 800A, 100A to 700A, and/or any other suitable ranges between 100A to 1000A.

Any suitable hardware of a vehicle can send a request to the charger to generate AC current for heating a battery. For example, the request can be sent via the charge port 106 and/or wirelessly via an antenna. In some instances, the vehicle 100 can send information from which the charger 200 of FIG. 2 can determine and generate an AC waveform for battery heating.

The alternating current received from the charger 200 of FIG. 2 can then be used to charge the battery pack 104. During the period when the battery pack 104 is heated, the BMS 102 may monitor the heating process and adjust the parameters (e.g., amplitude, frequency, DC offset, and/or the like) based on monitored results. The parameters can be adjusted dynamically. The parameters can be adjusted periodically. In some embodiments, the BMS 102 can monitor one or more of the amplitude, frequency, or DC offset of the alternating current received from the charger 200 and compare the monitored amplitude, frequency, and/or DC offset with what was requested by the BMS 102. For example, if the BMS 102 determines that the amplitude of the alternating current is less than the amplitude that was requested, the BMS 102 may transmit an updated request to the charger 200. The updated request may request a higher amplitude compared with what was previously requested. On the other hand, if the BMS 102 determines that the amplitude of the alternating current is higher than what was requested or higher than an appropriate level, the BMS 102 may transmit an updated request requesting the charger 200 to lower the amplitude of the alternating current.

In some embodiments, the BMS 102 may request alternating current with a DC offset. In some embodiments, during the heating process, the BMS 102 may also distribute the alternating current with a DC offset among the battery pack 104 and one or more other components of an electric vehicle. For example, if the temperature of the battery pack 104 is above a threshold (e.g., > 0°C), the BMS 102 may allow alternating current with the DC offset to be injected into the battery pack 104. As such, the AC component of the alternating current can be used to heat the battery pack 104, and the DC component of the alternating current can be used to charge the battery pack 104. On the other hand, if the BMS 102 determines that the temperature of the battery pack 104 is above the threshold, the BMS 102 may separate (e.g., using filtering techniques) the AC component of the alternating current and the DC component of the alternating current. For example, the BMS 102 may allow only the AC component to be injected into the battery pack 104 for heating the battery pack 104, and may utilize the DC component of the alternating current to power one or more other components (e.g., drive unit 112, compressor 110, power conversion system 108, or the like) of the electric vehicle 100.

In some embodiments, the BMS 102 can employ one or more control algorithms to manage the distribution of the AC and DC components. For example, based on the battery pack's temperature, state of charge, and/or other factors, the BMS 102 can determine how much of the AC component to be used for heating and how much of the DC component to be used for charging. Advantageously, the control algorithms can ensure that the battery pack 104 is heated efficiently without compromising the charging process. Additionally and/or optionally, the BMS 102 can dynamically adjust the separation of the AC and DC components based on real-time conditions. For example, if the battery pack's temperature rises above a certain threshold, the BMS 102 may reduce the AC component used for heating and increase the DC component used for charging. This dynamic adjustment may accomplish optimal vehicle performance and safety. As noted above, in addition to regulating the heating and charging of the battery pack 104, the BMS 102 can distribute the AC and DC components of alternating current from the charger 200 to one or more other auxiliary loads within the electric vehicle. For example, some DC component can be used to power one or more of the heating, ventilation, and air conditioning (HVAC) system, the compressor 110, the drive unit 112, or one or more other high-voltage devices, while the AC component and some DC component can be used to charge and heat the battery pack 104. This distribution can enable all vehicle systems to operate efficiently and effectively.

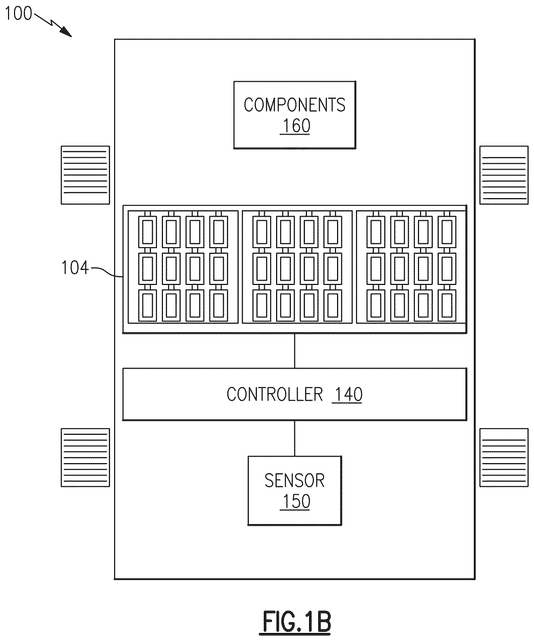

FIG. 1B is an example schematic representation of the example electric vehicle 100 of FIG. 1A in accordance with some embodiments of the present disclosure. As shown in FIG. 1B, the electric vehicle 100 can include the battery pack 104, a controller 140, a sensor 150, and components 160. In some examples, the controller 140 can include or implement the BMS 102 of FIG. 1A. For example, the controller 140 can include any suitable hardware (e.g., processor and memory) to implement the functionality described with reference to the BMS 102 of FIG. 1A. The components 160 can include the power conversion system 108, the compressor 110, the drive unit 112, or other components associated with the electric vehicle 100.

In some embodiments, the sensor 150 is configured to detect a temperature associated with the battery pack 104. The sensor 150 can be a thermistor, a thermocouple, a resistance temperature detector, an infrared sensor, a semiconductor temperature sensor, or the like. The controller 140 can be in communication with the sensor 150. The controller 140 can transmit a request to a charger (e.g., the charger 200 to be described with reference to FIG. 2) based on a sensor signal from the sensor 150. The request can identify an alternating current waveform of an alternating current that is to be generated by the charger. The controller 140 can provide alternating current associated with the request and received from the charger to at least a first battery cell of the battery pack 104 such that heat is generated based on an internal resistance of the first battery cell to increase a temperature associated with the first battery cell.

FIG. 2 is a diagram of components of the charger 200 in which embodiments of the present disclosure can be implemented. As shown in FIG. 2, the charger 200 includes at least a charger post 202A, a charger cabinet 204, and a site manager controller 206. The charger cabinet 204 includes the AC-DC power stage 208, the bus controller 210, and the DC-DC converter set 212A, DC-DC converter set 212B, DC-DC converter set 212C, and DC-DC converter set 212D. As noted above, the charger 200 can generate alternating current for heating up the battery pack 104 of the electric vehicle 100. The charger 200 can generate alternating current for charging/powering one or more other components of the electric vehicle 100. The charger 200 can be a Tesla Supercharger, for example. In some embodiments, at least some portions of the charger 200 and the electric vehicle 100 can form a charging system for charging and/or heating battery packs.

The charger 200 can include a plurality of charger cabinets 204. For example, the charger 200 can include 7 charger cabinets 204 to 204N as illustrated. Each charger cabinet 204 can provide power to a plurality of charger posts 202 (e.g., 202A, 202B, 202C, 202D, and/or 202N). Each of the charger posts 202 can charge a respective electric vehicle. Each of the charger posts 202 can receive power from a respective DC-DC converter set 212A to 212D of the charger cabinet 204. As shown in the example of FIG. 2, there are four DC-DC converter sets 212A, 212B, 212C, and 212D, where each of the four DC-DC converter sets 212A, 212B, 212C, and 212D includes four DC-DC converters. In some embodiments, the charger 200 can charge up to four vehicles through charger posts 202A, 202B, 202C, and 202D corresponding to each of the DC-DC converter sets 212A, 212B, 212C, and 212D, respectively. For example, the charger 200 can charge the electric vehicle 100 through the DC-DC converter set 212A and the charger post 202A.

The charger post 202 can serve as the physical interface between the electric vehicle 100 of FIG. 1A and the charger 200. The charger post 202 can house the connectors and cables that facilitate the transfer of electrical energy from the charger 200 to the electric vehicle 100. The charger post 202 can also include one or more communication interfaces that allow the electric vehicle 100 (e.g., the BMS 102) to send requests for heating the battery pack and receive responses from the charger 200.

The charger cabinet 204 can include power conversion and control components of the charger 200. The charger cabinet 204 houses the AC-DC power stage 208, the bus controller 210, and the DC-DC converter sets 212A, 212B, 212C, and 212D. These components can work together to convert grid power into the desired AC waveform and synchronize the output for heating the electric vehicle 100 using AC heating.

The site manager controller 206 can oversee the operation of the charger cabinet 204. The site manager controller 206 may coordinate the distribution of power and ensure that the charger cabinet 204 operates within the capacity of the charger cabinet 204. The site manager controller 206 can also manage communication between the charger 200 and other components of a charging station. The other components can include a battery energy storage system 220, a backend 225, and connection to a grid 230.

The AC-DC power stage 208 of the charger cabinet 204 can convert grid power from the grid 230 into voltage signals on a high-voltage direct current (DC) bus 250. The AC-DC power stage 208 can output 900 Volt signals to the high-voltage DC bus 250, where the signals can serve as the input for the DC-DC converter sets 212A, 212B, 212C, and 212D. The AC-DC power stage 208 can ensure that voltage signal on the high-voltage DC bus 250 is stable and capable of supplying the power for heating the battery pack 104. The AC-DC power stage 208 can include 5 AC-DC power stages.

The bus controller 210 can manage the high-voltage DC bus 250 and may coordinate the operation of the DC-DC converter sets 212A, 212B, 212C, and 212D. The bus controller 210 can receive requests from the BMS 102 of FIG. 1A and translate these requests into commands for the DC-DC converter sets 212A, 212B, 212C, and 212D. The bus controller 210 can manage and control the DC-DC converter sets 212A, 212B, 212C, and 212D to generate the desired alternating current with the requested amplitude, frequency, and/or DC offset.

The DC-DC converter sets 212A, 212B, 212C, and 212D can include any suitable DC-DC converters that can convert signals on the high-voltage DC bus 250 into the alternating current for heating the battery pack 104. Each of the DC-DC converter sets 212A, 212B, 212C, and 212D can include one or more DC-DC converters. As noted above and indicated in FIG. 2, each of the illustrated DC-DC converter sets 212A, 212B, 212C, and 212D includes four DC-DC converters. However, one or more of the DC-DC converter sets 212A, 212B, 212C, and 212D can include other suitable numbers of DC-DC converters. Each DC-DC converter set can be capable of generating a portion of the alternating current, and the outputs of DC-DC converters of a DC-DC converter set can be synchronized to constructively add up to the requested amplitude, frequency, and/or DC offsets. Additionally, the DC-DC converter sets 212A, 212B, 212C, and 212D can generate alternating current with varying amplitudes, frequencies, and DC offsets as specified by the BMS 102 of FIG. 1A.

Responsive to receiving a request for heating up the battery pack 104 from the electric vehicle 100 of FIG. 1A, the charger 200 can generate alternating current based on the request and inject the alternating current into the battery pack 104 of FIG. 1A to heat up (e.g., using heat generated by the internal resistance of battery cells of the battery pack 104) the battery pack 104 before and/or during charging of the battery pack 104. As noted above, the bus controller 210 can control the AC-DC power stage 208 and the DC-DC converter sets 212A, 212B, 212C, and 212D to generate and synchronize alternating current for providing to the battery pack 104. For example, each of the DC-DC converter sets 212A, 212B, 212C, and 212D can convert signal(s) on the high-voltage DC bus 250 into a desired AC waveform. The DC-DC converter sets 212A, 212B, 212C, and 212D can be configured to generate the AC waveform according to specified amplitude, frequency, and DC offset as requested by the BMS 102. In some embodiments, each of the DC-DC converters in the DC-DC converter sets 212A, 212B, 212C, and 212D can generate a portion of the alternating current that is to be injected into the battery pack 104. Individual AC waveforms generated by DC-DC converters in each of the DC-DC converter sets 212A, 212B, 212C, and 212D may be phase-aligned and frequency-aligned, thereby allowing individual AC waveforms to add constructively rather than destructively to generate requested alternating current. The amplitude of the alternating current may be distributed among DC-DC converters in the DC-DC converter sets 212A, 212B, 212C, and 212D. For example, if the BMS 102 requests an alternating current with an amplitude of 400A from the DC-DC converter set 212A, each of the DC-DC converters in the DC-DC converter set 212A may generate an AC waveform with an amplitude of 100A.

In some embodiments, the charger 200 (e.g., the bus controller 210) may monitor signals on the high-voltage DC bus 250 and/or signals output by the DC-DC converter sets 212A, 212B, 212C, and 212D to maintain synchronization among AC waveforms generated by DC-DC converters of the DC-DC converter sets 212A, 212B, 212C, and 212D and/or protect components of the charger 200 from being damaged. More specifically, the bus controller 210 can function without digital synchronization techniques to synchronize outputs (e.g., current) associated with the DC-DC converter sets 212A, 212B, 212C, and 212D. Instead, each of the DC-DC converter sets 212A, 212B, 212C, and 212D and/or each DC-DC converter of a respective set can monitor the voltage on the high-voltage DC bus 250 to maintain synchronization (e.g., based on monitored phase and/or frequency of the voltage on the high-voltage DC bus 250). For example, the DC-DC converter set 212B can monitor the voltage on the high-volage DC bus 250 to synchronize DC-DC converters in the DC-DC converter set 212B. Each of the DC-DC converter sets 212A, 212B, 212C, and 212D can also monitor a voltage ripple amplitude on the high-voltage DC bus 250 to ensure there is no excessive current flowing into and/or out from a capacitor (not shown in FIG. 2) that is connected to the high-voltage DC bus 250 and supplies current to the DC-DC converter sets 212A, 212B, 212C, and 212D. Additionally, the bus controller 210 can also add up current drawn by each of the DC-DC converter sets 212A, 212B, 212C, and 212D to ensure that the total current drawn by the DC-DC converter sets 212A, 212B, 212C, and 212D is below a maximum limit. As such, the capacitor may not be damaged or over-stressed.

Additionally and/or optionally, to reduce stress the capacitor that supplies current to the DC-DC converter sets 212A, 212B, 212C, and 212D, the input signals (e.g., input voltages or currents) to at least some of the DC-DC converter sets 212A, 212B, 212C, and 212D can be controlled to be in opposite phase to each other. For example, rather than supplying four in-phase input signals to each of the DC-DC converter sets 212A, 212B, 212C, and 212D, DC-DC converter sets 212A and 212B can receive input signals in a first phase while DC-DC converter sets 212C and 212D can receive input signals in a second phase that is opposite to the first phase. As another example, each of the DC-DC converter sets 212A, 212B, 212C, and 212D can receive an input signal that is out-of-phase with input signals received by other DC-DC converter sets. By optionally avoiding supplying all in-phase signals to the DC-DC converter sets 212A, 212B, 212C, and 212D, the bus controller 210 can prevent the capacitor from being over-stressed.

In some embodiments, the charger 200 can be used for charging and heating a battery pack of an electric vehicle (e.g., the battery pack 104 of the electric vehicle 100). The charger 200 can include a plurality of voltage converters (e.g., the DC-DC converter sets 212A, 212B, 212C, and 212D) and a controller (e.g., the bus controller 210) in communication with the plurality of voltage converters. The plurality of voltage converters can be configured to generate alternating current based on a control signal and transmit the alternating current to the electric vehicle. The controller can be configured to receive a request associated with heating the battery pack. In response to the request, the controller can generate and transmit the control signal to the plurality of voltage converters. The controller can cause the plurality of voltage converters to transmit the alternating current associated with the request to the electric vehicle for heating the battery pack.

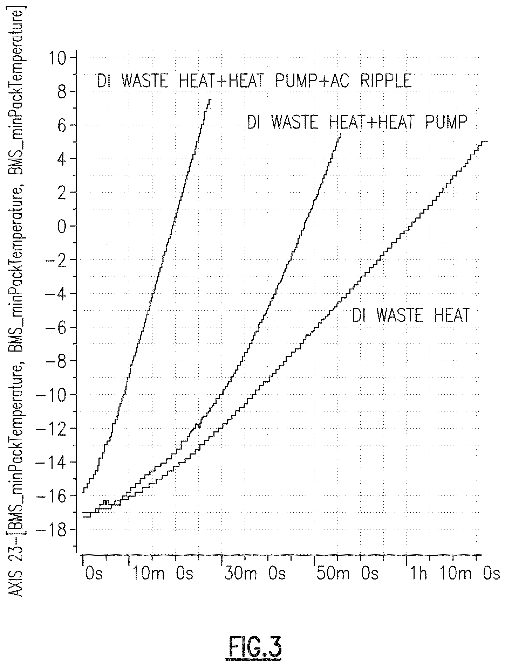

FIG. 3 is a graph of heating performance associated with various heating methods. For example, FIG. 3 shows heating performance of the battery pack 104 associated with three methods under an ambient temperature of -20°C and an initial temperature of the battery pack 104 under -15°C.

In some examples, the first method, a drive inverter (DI) waste heating, takes approximately 75 minutes to heat the battery pack 104. The second method, DI waste heating combined with a heat pump, reduces the heating time to approximately 55 minutes. The third method, DI waste heating combined with a heat pump and using alternating current generated by the charger 200 based on requests from the BMS 102, significantly reduces the heating time to approximately 21 minutes. In some examples, the alternating current used in the third method of heating the battery pack 104 has an amplitude of 360A and a frequency of 100Hz.

FIG. 3 demonstrates that utilizing alternating current requested by the BMS 102 of FIG. 1A and generated by the charger 200 of FIG. 2 to heat the battery pack 104 of FIG. 1A achieves the fastest heating performance of the 3 methods, reaching the desired temperature in the least amount of time. This highlights the desirable efficiency and effectiveness of the disclosed systems and methods in rapidly heating the battery pack 104 of FIG. 1A under cold ambient conditions.

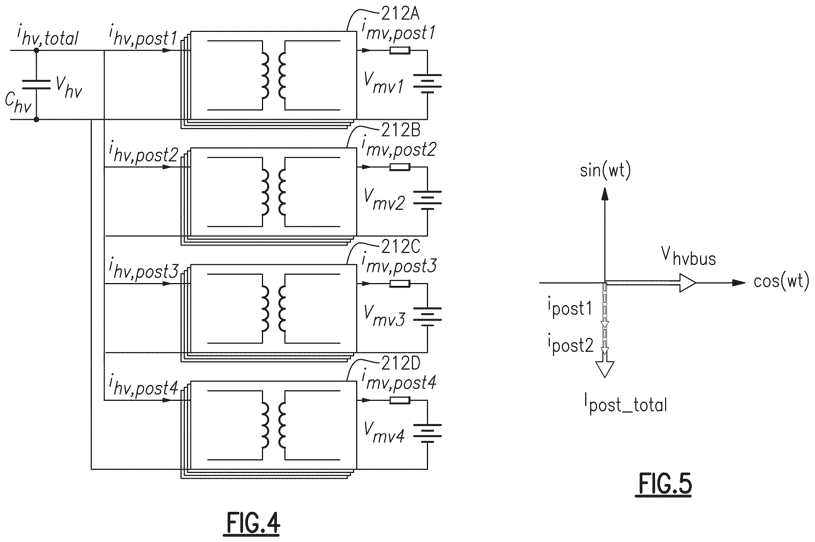

FIG. 4 is a schematic diagram of parts of a charger (e.g., the charger 200) for charging an electric vehicle (e.g., the electric vehicle 100) according to some embodiments. As illustrated in FIG. 4, a plurality of DC-DC converters (e.g., DC-DC converters of the DC-DC converter sets 212A, 212B, 212C, and/or 212D) that provide power to each charger post (e.g., charger posts 202A, 202B, 202C, 202D of FIG. 2) are in parallel with each other. The DC-DC converters can force high voltage side current to be in phase to generate medium voltage side AC current. Due to relatively low control bandwidth, AC-DC converters (not illustrated in FIG. 4), such as AC-DC power stages 208 of FIG. 2, typically process only DC power and losses and do not typically process AC power for AC heating. In some examples, AC power is circulated in a high voltage capacitor Cₕᵥ. The total high voltage side current iₕᵥ, ₜₒₜₐₗ can lag the capacitor Cₕᵥ voltage vₕᵥ by 90 degrees. The total high voltage side current iₕᵥ, ₜₒₜₐₗ can be the summation (e.g., vector addition) of individual high voltage side post currents iₕᵥ, ₚₒₛₜ₁ to iₕᵥ, ₚₒₛₜ₄. As noted above, in some embodiments, outputs generated by each of the DC-DC converters in a DC-DC converter set (e.g., DC-DC converters 212A) can be synchronized to add constructively. In some embodiments, input currents to different DC-DC converter sets (e.g., iₕᵥ, ₚₒₛₜ₁ and iₕᵥ, ₚₒₛₜ₃) can be out-of-phase to avoid over-stress the capacitor Cₕᵥ.

FIG. 5 is a graph of phase of currents for charger posts of the charger of FIG. 4 and the phase of a high voltage on a bus (e.g., V_{hvbus}) of the charger of FIG. 4. This graph illustrates the voltage post currents being phase locked (e.g., current iₚₒₛₜ₁ for charger post 202A of FIG. 2, and current iₚₒₛₜ₂ for charger post 202B of FIG. 2, having the same phase). This graph corresponds to the DC-DC converter sets for charger posts of FIG. 4 locking to produce a medium voltage side current iₘᵥ having the same phase across the charger posts 202A, 202B, 202C, and 202D of FIG. 2, where the phase of the medium voltage side current iₘᵥ is rotated 90 degrees relative to the high voltage vₕᵥ. The total high voltage side current iₕᵥ, ₜₒₜₐₗ can be the sum of individual high voltage side post currents iₕᵥ, ₚₒₛₜ₁ to iₕᵥ, ₚₒₛₜ₄. The high voltage capacitor Cₕᵥ rating (e.g., around 150A) can limit total medium voltage side current I_{MV} (e.g., i_{mv,post1} + i_{mv,post2} + i_{mv,post3} + i_{mv,post4}) ripple capability to a maximum ripple current (e.g., 500A).

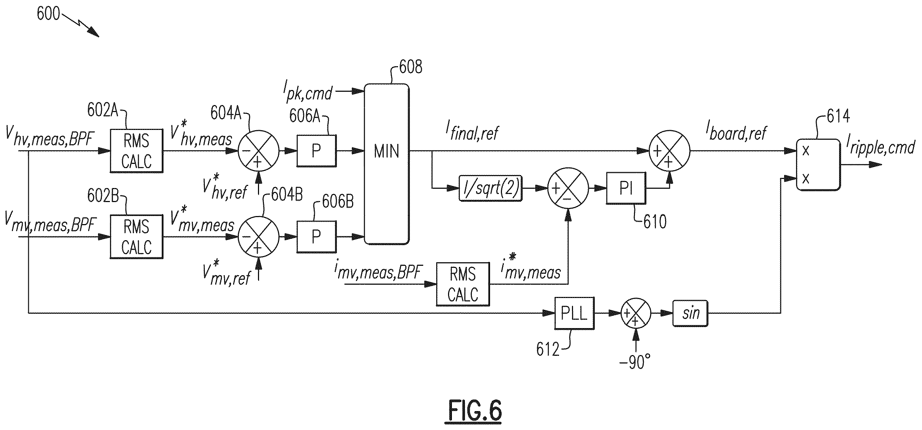

FIG. 6 is a schematic diagram of components (e.g., a control system 600) of the charger of FIG. 4 for controlling AC ripple across multiple DC-DC voltage converters (e.g., DC-DC converters of the DC-DC converter sets 212A, 212B, 212C, and/or 212D) according to some embodiments. As shown in FIG. 6, the components for controlling AC ripple across multiple DC-DC voltage converters can include a root mean square (RMS) calculator 602A, RMS calculator 602B, summer 604A, summer 604B, proportional controller 606A, proportional controller 606B, comparator 608, proportional integral controller 610, phase-locked loop (PLL) 612, and control signal generator 614.

In some examples, the RMS calculator 602A and the RMS calculator 602B can calculate root mean square value of respective incoming signals. The proportional controller 606A can adjust a response of the control system 600 based on output (e.g., difference between two input signals) of the summer 604A. The proportional controller 606B can adjust the response of the control system 600 based on output (e.g., difference between two input signals) of the summer 604B. The comparator 608 can take the minimum value between outputs of the proportional controller 606A and the proportional controller 606B. The proportional integral controller 610 can eliminate steady-state error and improve stability of the control system 600. The PLL 612 can be used to synchronize the phase locked by the control system 600. The control signal generator 614 can process input signals to generate a ripple command signal (e.g., *Iᵣᵢₚₚₗₑ,_{cmd}*)

The control approach of FIG. 6 can correspond to the charger post currents being phase locked as shown in FIG. 5. The DC-DC converter sets 212A to 212D of FIG. 2 on all charger posts 202A to 202D of a cabinet 204 can lock at the same phase (e.g., -90 degrees) relative to the high voltage bus 250 ripple. The high voltage (e.g., v*_{hv,meas}) and medium voltage (e.g., v*_{mv,meas}) bus ripple controllers on each of the DC-DC converter sets 212A to 212D can limit (e.g., using *I_{ripple,cmd}*) a maximum ripple on either port. When multiple posts join, if the high voltage bus ripple exceeds a threshold, the current can automatically be derated (shared proportionally between posts). The peak ripple current on a post can be clamped to a level requested by a vehicle (e.g., the electric vehicle 100) and any remaining capability can be shared between one or more other posts.

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, a person of ordinary skill in the art will recognize that changes may be made in form and detail without departing from the scope of the present disclosure. Thus, the present disclosure is limited only by the claims.

In the foregoing specification, the disclosure has been described with reference to specific embodiments. However, as one skilled in the art will appreciate, various embodiments disclosed herein can be modified or otherwise implemented in various other ways without departing from the spirit and scope of the disclosure. Accordingly, this description is to be considered as illustrative and is for the purpose of teaching those skilled in the art the manner of making and using various embodiments of the disclosed display assemblies.

It is to be understood that the forms of disclosure herein shown and described are to be taken as representative embodiments. Equivalent elements, materials, processes or steps may be substituted for those representatively illustrated and described herein. Moreover, certain features of the disclosure may be utilized independently of the use of other features, all as would be apparent to one skilled in the art after having the benefit of this description of the disclosure. Expressions such as "including", "comprising", "incorporating", "consisting of", "have", "is" used to describe and claim the present disclosure are intended to be construed in a non-exclusive manner, namely allowing for items, components or elements not explicitly described also to be present. Reference to the singular is also to be construed to relate to the plural. Further, various embodiments disclosed herein are to be taken in the illustrative and explanatory sense, and should in no way be construed as limiting of the present disclosure.

All joinder references (e.g., attached, affixed, coupled, connected, and the like) are only used to aid the reader's understanding of the present disclosure, and may not create limitations, particularly as to the position, orientation, or use of the systems and/or methods disclosed herein. Therefore, joinder references, if any, are to be construed broadly. Moreover, such joinder references do not necessarily infer that two elements are directly connected to each other. Additionally, all numerical terms, such as, but not limited to, "first", "second", "third", "primary", "secondary", "main" or any other ordinary and/or numerical terms, should also be taken only as identifiers, to assist the reader's understanding of the various elements, embodiments, variations and/or modifications of the present disclosure, and may not create any limitations, particularly as to the order, or preference, of any element, embodiment, variation and/or modification relative to, or over, another element, embodiment, variation and/or modification.

The illustrative algorithms described in connection with the embodiments disclosed herein can be implemented as electronic hardware (e.g., ASICs or FPGA devices), computer software that runs on computer hardware, or combinations of both. Moreover, the various illustrative logical blocks and modules described in connection with the embodiments disclosed herein can be implemented or performed by a machine, such as a processor device, a digital signal processor ("DSP"), an application specific integrated circuit ("ASIC"), a field programmable gate array ("FPGA") or other programmable logic device, discrete gate or transistor logic, discrete hardware components, or any combination thereof designed to perform the functions described herein. A processor device can be a microprocessor, but in the alternative, the processor device can be a controller, microcontroller, or state machine, combinations of the same, or the like. A processor device can include electrical circuitry configured to process computer-executable instructions. In another embodiment, a processor device includes an FPGA or other programmable device that performs logic operations without processing computer-executable instructions. A processor device can also be implemented as a combination of computing devices, e.g., a combination of a DSP and a microprocessor, a plurality of microprocessors, one or more microprocessors in conjunction with a DSP core, or any other such configuration. Although described herein primarily with respect to digital technology, a processor device may also include primarily analog components. For example, some or all of the rendering techniques described herein may be implemented in analog circuitry or mixed analog and digital circuitry. A computing environment can include any type of computer system, including, but not limited to, a computer system based on a microprocessor, a mainframe computer, a digital signal processor, a portable computing device, a device controller, or a computational engine within an appliance, to name a few.

It will also be appreciated that one or more of the elements depicted in the drawings/figures can also be implemented in a more separated or integrated manner, or even removed or rendered as inoperable in certain cases, as is useful in accordance with a particular application.

## Claims

1. A system for managing a battery pack of an electric vehicle, the system comprising:
a sensor configured to detect a temperature associated with the battery pack; and
a controller in communication with the sensor, the controller configured to:
transmit a request to a charger based on a sensor signal from the sensor; and
provide at least a portion of alternating current associated with the request and received from the charger to at least a first battery cell of the battery pack such that heat is generated based on an internal resistance of the first battery cell to increase a temperature associated with the first battery cell.

2. The system of Claim 1, wherein the controller is configured to transmit the request to the charger in response to determining, based on the sensor signal, that the temperature associated with the battery pack satisfies a threshold.

3. The system of Claim 1, wherein the request specifies at least one of an amplitude, a frequency, or a direct current (DC) offset for the alternating current.

4. The system of Claim 3, wherein the controller is configured to determine at least one of the amplitude, the frequency, or the DC offset based on at least one of: a cell type of the battery pack, the temperature associated with the battery pack, or a state of charge of the battery pack.

5. The system of Claim 1,
wherein a frequency of the alternating current is in a range from 80 Hertz (Hz) to 500 Hz, or
wherein an amplitude of the alternating current is in a range from 100 Amperes to 1000 Amperes, or
wherein the controller is configured to monitor the alternating current and transmit an updated request based on monitoring the alternating current.

6. An electric vehicle comprising:
a plurality of battery cells comprising a first battery cell; and
a battery management system configured to:
detect a condition associated with the plurality of battery cells;
in response to detecting the condition, transmit a request to a charger; and
provide alternating current associated with the request and received from the charger to at least the first battery cell such that an internal resistance of the first battery cell and the alternating current increase a temperature associated with the first battery cell.

7. The electric vehicle of Claim 6, wherein the condition comprises at least one of: a temperature associated with the plurality of battery cells, a state of charge of the plurality of battery cells, or a cell type of the plurality of battery cells.

8. The electric vehicle of Claim 6, wherein the request specifies a direct current (DC) offset for the alternating current, and wherein the battery management system determines the DC offset based at least in part on a temperature associated with the plurality of battery cells.

9. The electric vehicle of Claim 8,
wherein the battery management system is configured to provide the alternating current to the plurality of battery cells to charge at least one of the plurality of battery cells, or
further comprising one or more other components, wherein the battery management system provides alternating current to power the one or more other components, and wherein the one or more other components comprise at least one of a drive unit, a compressor, or a power conversion system.

10. The electric vehicle of Claim 6, wherein the request specifies an amplitude and a DC offset for the alternating current, and wherein the battery management system is configured to determine the amplitude and the DC offset based at least in part on the condition.

11. The electric vehicle of Claim 6, wherein the battery management system is configured to:
monitor an amplitude of the alternating current to generate a monitor signal;
generate, based on the monitor signal, an updated request for adjusting the amplitude of the alternating current; and
transmit the updated request to the charger.

12. A method for managing a battery pack, the method comprising:
detecting a temperature associated with the battery pack;
transmitting a request to a charger based on the temperature, the request identifying an alternating current waveform; and
providing at least a portion of alternating current associated with the request and received from the charger to at least a first battery cell of the battery pack such that heat is generated based on an internal resistance of the first battery cell to increase the temperature associated with the first battery cell.

13. The method of Claim 12, further comprising:
monitoring an amplitude of the alternating current to generate a monitor signal; and
generating, based on the monitor signal, and transmitting an updated request to the charger for adjusting the amplitude of the alternating current.

14. The method of Claim 12, further comprising:
determining that the temperature associated with the battery pack satisfies a threshold,
wherein the request is transmitted in response to determining that the temperature associated with the battery pack satisfies the threshold.

15. The method of Claim 12, further comprising:
determining an amplitude, a frequency, and a DC offset based on at least one of: a cell type of the battery pack, the temperature associated with the battery pack, and a state of charge of the battery pack, wherein the alternating current waveform indicates the amplitude, the frequency, and the DC offset, or
further comprising: providing the alternating current to power a drive unit, a compressor, or a power conversion system of an electric vehicle, or
wherein a frequency of the alternating current is between 80 Hz to 500 Hz.
